# EUROPEAN PATENT APPLICATION

(11) **EP 4 644 299 A1**
(43) Date of publication of application: **05.11.2025**
(21) Application number: 23937077.8
(22) Date of filing: 23.05.2023
(51) Int. Cl.: B65G 47/30, B07C 1/04

(54) **SINGLE-PACKAGE SEPARATING AND SORTING MACHINE FOR LARGE PACKAGES**

(30) Priority: 18.05.2023 CN 202310563078
(71) Applicant: Wayzim Technology Co., Ltd., Wuxi, Jiangsu 214000 (CN)
(72) Inventor: OUYANG, Qingsheng, Wuxi, Jiangsu 214000 (CN); CAI, Ye, Wuxi, Jiangsu 214000 (CN); RUI, Hao, Wuxi, Jiangsu 214000 (CN)
(74) Representative: Murgitroyd & Company
(86) International application number: PCT/CN2023/095779
(87) International publication number: WO 2024/234398

(57) **Abstract**

A single-package separating and sorting machine for large packages, relates to the field of logistics package sorting apparatuses. The present invention includes an input belt conveyor (1), a separation area (2), and a multi-stage distance-increasing belt conveyor set (3) that are sequentially spliced. In the present invention, a divergence area included in a standard sorting machine is removed, such that the sorting machine is more suitable for conveying and sorting large and heavy packages, and the equipment cost is saved by eliminating a redundant design; and the multi-stage distance-increasing belt conveyor set is arranged, such that when a separation belt conveyor set and a visual inspection system (23) cooperate to convey packages to the multi-stage distance-increasing belt conveyor set in a single column and at a relatively small spacing, by means of multiple distance-increasing adjustments, the multi-stage distance-increasing belt conveyor set adjusts packages fed by the separation belt conveyor set stage by stage to increase the package spacing, so as to adjust the package spacing to a specified spacing at a distal end of the multi-stage distance-increasing belt conveyor set. Compared with distance increasing by means of a single long-duration pause, the efficiency of increasing the distance between the packages is significantly improved, thereby improving the efficiency of separating and sorting the packages by means of the sorting machine, and reducing the jamming of packages.

## Description

### TECHNICAL FIELD

The present invention belongs to the technical field of logistics package sorting equipment, and particularly relates to a single-package separating and sorting machine for large packages.

### BACKGROUND

Sorting machines are mainly used in the field of logistics sorting and configured to convey and sort packages and convert packages from a stacked or disorderly state to an orderly state to facilitate subsequent classification and sorting. Currently, a standard sorting machine includes an input belt conveyor, a divergence area, a single-package separation area, a centering machine, and a distance-increasing belt conveyor. Each machine serves as an independent modular device to achieve specified functions. For example, the divergence area is configured to separate packages laterally, increase a lateral spacing, and arrange packages into a plurality of columns for conveying; and the separation area combines visual assistance with separation modules to arrange disordered packages in an orderly single-package sequence.

### SUMMARY

### Technical problems

Under the operating condition of large packages, a standard sorting machine scheme has the following defects: due to a large volume and space occupation of large packages, multi-column side-by-side conveying is not feasible, thereby limiting the function of the divergence area and resulting in design redundancy under the operating condition of large packages; and moreover, according to the standard sorting machine scheme, a certain spacing between a preceding package and a subsequent package is created directly through a single distance-increasing operation, and when a speed of a distance-increasing belt conveyor is constant, the preceding package moves forward while the subsequent package remains stopped for a long time, which easily causes package jamming and reduces the efficiency of package conveying and sorting.

In view of the problems in the related art, the present invention provides a single-package separating and sorting machine for large packages to overcome the technical defects of the standard sorting machine scheme in the prior art, including design redundancy under the operating condition of large packages, and low efficiency of package conveying and sorting caused by easy package jamming due to the long time of distance increasing by the distance-increasing belt conveyor.

### Technical solution

In order to solve the above technical problems, the present invention is achieved by means of the following technical solution:
A single-package separating and sorting machine for large packages is provided by the present invention, including an input belt conveyor, a separation area, and a multi-stage distance-increasing belt conveyor set;
the input belt conveyor is configured to convey packages toward the separation area;
the separation area includes a separation belt conveyor set, a bracket, and a visual inspection system, the separation belt conveyor set is spliced and mounted between the input belt conveyor and the multi-stage distance-increasing belt conveyor set, the bracket is fixedly mounted above the separation belt conveyor set, and the visual inspection system is fixedly mounted at a top end of the bracket;
the visual inspection system detects positions of packages conveyed to the separation belt conveyor set and controls the activation of the separation belt conveyor set according to the detected package position information, such that the separation belt conveyor set outputs the packages fed by the input belt conveyor in a single column at a certain spacing toward the multi-stage distance-increasing belt conveyor set;
the multi-stage distance-increasing belt conveyor set adjusts packages fed by the separation belt conveyor set stage by stage to increase the package spacing, so as to adjust the package spacing to a specified spacing at a distal end of the multi-stage distance-increasing belt conveyor set;
support assemblies located below a conveying belt on the belt conveyor are mounted in the input belt conveyor, the separation belt conveyor set, and the multi-stage distance-increasing belt conveyor set;
the support assembly includes a transmission member, a circulation driving member, and a support member, where the support member is mounted on a bottom surface of the conveying belt through the circulation driving member to support the conveying belt, and the circulation driving member is in transmission connection with a belt roller in the belt conveyor through the transmission member; and
when the belt conveyors in the input belt conveyor, the separation belt conveyor set, and the multi-stage distance-increasing belt conveyor set operate, the belt roller rotates under the driving action of the conveying belt, and in this case, the belt roller drives the circulation driving member to operate through the transmission member, such that the circulation driving member drives the support member to move synchronously with the conveying belt on a bottom surface of the conveying belt.

Further, the separation belt conveyor set includes a plurality of small separation belt conveyors, and the plurality of small separation belt conveyors are arranged in a matrix manner and evenly distributed.

Further, the multi-stage distance-increasing belt conveyor set includes a plurality of distance-increasing belt conveyors, the plurality of distance-increasing belt conveyors are sequentially spliced, and photoelectric sensors on both sides above the conveying belt configured to detect the positions of packages are mounted on each of the distance-increasing belt conveyors.

Further, the circulation driving member includes two transmission rollers and two transmission belts, the two transmission rollers are arranged in parallel and rotatably mounted on a frame of the belt conveyor, the transmission belts are transmission-mounted between both ends of the two transmission rollers, and the support member is fixedly mounted between the two transmission belts; and
the two transmission rollers are respectively disposed on one side of the two belt rollers on the belt conveyor, and the belt roller is in transmission connection with the transmission roller on one side through a transmission member.

Further, the transmission member includes a driven pulley and a driving pulley, the driven pulley is fixedly mounted at an end portion of the transmission roller, the driving pulley is fixedly mounted at an end portion of the belt roller, and the driving pulley and the driven pulley are in transmission connection through a transmission belt.

Further, the support member includes a plurality of supporting strips and a plurality of flexible connecting ribs, and adjacent supporting strips are arranged in parallel and flexibly connected through the flexible connecting ribs; and
the plurality of supporting strips are sequentially connected through the flexible connecting ribs to form a supporting belt, the supporting belt is connected end to end to form an annular belt, and both sides of the annular belt are respectively fixedly connected to inner side edges of the two transmission belts.

Further, a support plate is disposed between the two transmission rollers, and the support plate is fixedly mounted on the frame of the belt conveyor; and
a plurality of equidistantly distributed support blocks are fixedly mounted on bottom surfaces of the supporting strips, a support roller is rotatably mounted on a bottom surface of the support block, and a bottom end of the support roller is movably abutted against a surface of the support plate.

Further, friction transmission portions corresponding to the transmission belt are disposed at both ends of the transmission roller, and a clearance portion that provides clearance for the support block and the support roller on the bottom surface of the supporting strip is disposed at a middle of the transmission roller.

### Beneficial effects

1. In the present invention, a divergence area included in a standard sorting machine is removed, such that the sorting machine is more suitable for conveying and sorting large and heavy packages, and the equipment cost is saved by eliminating a redundant design; and the multi-stage distance-increasing belt conveyor set is arranged, such that when a separation belt conveyor set and a visual inspection system cooperate to convey packages to the multi-stage distance-increasing belt conveyor set in a single column and at a relatively small spacing, and by means of multiple distance-increasing adjustments, the multi-stage distance-increasing belt conveyor set adjusts packages fed by the separation belt conveyor set stage by stage to increase the package spacing, so as to adjust the package spacing to a specified spacing at a distal end of the multi-stage distance-increasing belt conveyor set. The multi-stage distance-increasing belt conveyor set performs a plurality of small-amplitude distance-increasing operations on a plurality of packages simultaneously, and compared with distance increasing by means of a single long-duration pause, the efficiency of increasing the distance between the packages is significantly improved, thereby improving the efficiency of separating and sorting the packages by means of the sorting machine, and reducing the jamming of packages.
2. In the present invention, support assemblies located below a conveying belt on the belt conveyor are mounted in the input belt conveyor, the separation belt conveyor set, and the multi-stage distance-increasing belt conveyor set, and the support assembly supports and protects the conveying belt in the belt conveyor during the conveying of large packages through the input belt conveyor, the separation belt conveyor set, and the multi-stage distance-increasing belt conveyor set, which prevents the conveying belt from being compressed, deformed, or broken due to the heavy weight of packages, and ensures the normal operation of the input belt conveyor, the separation belt conveyor set, and the multi-stage distance-increasing belt conveyor set.
3. The conveying belt support assembly of the present invention is different from a plurality of support roller support structures or plate-shaped support mechanisms in the prior art. When the belt conveyors in the input belt conveyor, the separation belt conveyor set, and the multi-stage distance-increasing belt conveyor set operate, the belt roller rotates under the driving action of the conveying belt, and in this case, the belt roller drives the circulation driving member to operate through the transmission member, such that the circulation driving member drives the support member to move synchronously with the conveying belt on a bottom surface of the conveying belt. The support member moves synchronously with the conveying belt for support, which prevents relative sliding and friction between the conveying belt and the support member during movement, prevents continuous heating of the conveying belt due to long-term friction during operation, and prevents wear-induced damage to the conveying belt or fire caused by friction-induced high temperature, thereby extending the service life of the conveying belt and enhancing the safety of using the sorting machine.
4. In the present invention, the support plate is fixedly mounted below the support member, the support member is roller-supported on the support plate through the roller, such that the stability of the support member is enhanced through the cooperation of the support plate and the rollers, thereby further enhancing the supporting effect of the support member on the conveying belt, and ensuring the normal operation of the conveying belt. The support member is in rolling connection with the support plate through the roller, which prevents friction damage to the support member and the support plate, extends the service life of the support assembly, and prevents fires caused by frictional heating, thereby further enhancing the safety of using the sorting machine.

Notably, it is not necessary for any product implementing the present invention to achieve all the advantages mentioned above at the same time.

### BRIEF DESCRIPTION OF THE DRAWINGS

To describe the technical solutions in the examples of the present invention more clearly, the accompanying drawings required for describing the examples are briefly described below. Apparently, the accompanying drawings in the following description show merely some examples of the present invention, and those of ordinary skill in the art may still derive other drawings from these accompanying drawings without creative efforts.
FIG. 1 is a schematic diagram of a three-dimensional structure of a separating and sorting machine of the present invention.
FIG. 2 is a schematic diagram of a three-dimensional structure of a separation area of a separating and sorting machine of the present invention.
FIG. 3 is a schematic diagram of a three-dimensional structure of a separation belt conveyor set of the present invention.
FIG. 4 is a schematic diagram of a three-dimensional structure of a distance-increasing belt conveyor of the present invention.
FIG. 5 is a schematic diagram of a three-dimensional sectional structure of a distance-increasing belt conveyor of the present invention.
FIG. 6 is a schematic diagram of an enlarged structure of a portion A in FIG. 5 of the present invention.
FIG. 7 is a schematic diagram of a three-dimensional structure of a support assembly of the present invention.
FIG. 8 is a schematic diagram I of a three-dimensional sectional structure of a support assembly of the present invention.
FIG. 9 is a schematic diagram of an enlarged structure of a portion B in FIG. 8 of the present invention.
FIG. 10 is a schematic diagram II of a three-dimensional sectional structure of a support assembly of the present invention.
FIG. 11 is a schematic diagram of an enlarged structure of a portion C in FIG. 10 of the present invention.

Reference numerals in the figures: 1-input belt conveyor; 2-separation area; 21-small separation belt conveyor; 22-bracket; 23-visual inspection system; 3-multi-stage distance-increasing belt conveyor set; 31-distance-increasing belt conveyor; 32-photoelectric sensor; 4-support assembly; 41-transmission roller; 411-friction transmission portion; 412-clearance portion; 42-transmission belt; 43-support plate; 44-driven pulley; 45-transmission belt; 46-driving pulley; 47-support member; 471-supporting strip; 472-flexible connecting rib; 48-support block; 49-support roller; 100-belt roller; and 200-conveying belt.

### DETAILED DESCRIPTION OF EMBODIMENTS

The technical solutions in the examples of the present invention will be clearly and completely described below in combination with the accompanying drawings in the examples of the present invention. Apparently, the examples described are merely some rather than all of the examples of the present invention. Based on the described examples of the present invention, all other examples acquired by those of ordinary skill in the art without making creative efforts fall within the protection scope of the present invention.

In the description of the present invention, it is to be understood that the terms "opening", "upper", "lower", "top", "middle", "inner" and the like indicate azimuthal or positional relations only for ease of description of the present invention and for simplicity of description, and are not intended to indicate or imply that the referenced component or element must have a particular orientation and be constructed and operative in a particular orientation, and thus shall not be construed as a limitation on the present invention.

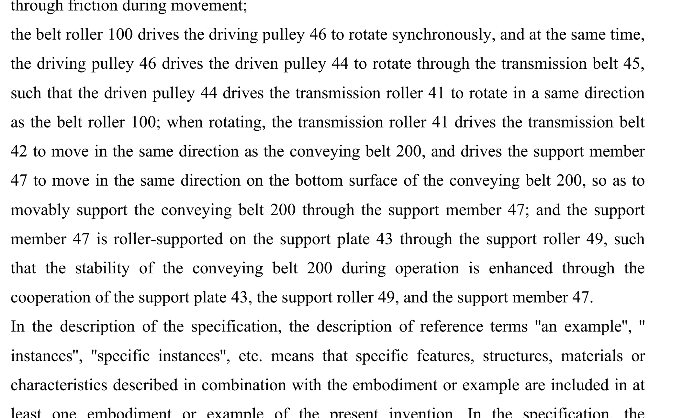

With reference to FIGS. 1, 5, and 7, a single-package separating and sorting machine for large packages of the present invention, includes an input belt conveyor 1, a separation area 2, and a multi-stage distance-increasing belt conveyor set 3 that are sequentially spliced; the input belt conveyor 1 is configured to convey packages toward the separation area 2; the separation area 2 includes a separation belt conveyor set, a bracket 22, and a visual inspection system 23, the separation belt conveyor set is spliced and mounted between the input belt conveyor 1 and the multi-stage distance-increasing belt conveyor set 3, the bracket 22 is fixedly mounted above the separation belt conveyor set, and the visual inspection system 23 is fixedly mounted at a top end of the bracket 22; the visual inspection system 23 detects positions of packages conveyed to the separation belt conveyor set and controls the activation of the separation belt conveyor set according to the detected package position information, such that the separation belt conveyor set outputs the packages fed by the input belt conveyor 1 in a single column at a certain spacing toward the multi-stage distance-increasing belt conveyor set 3; the multi-stage distance-increasing belt conveyor set 3 adjusts packages fed by the separation belt conveyor set stage by stage to increase the package spacing, so as to adjust the package spacing to a specified spacing at a distal end of the multi-stage distance-increasing belt conveyor set 3; support assemblies 4 located below a conveying belt 200 on the belt conveyor are mounted in the input belt conveyor 1, the separation belt conveyor set, and the multi-stage distance-increasing belt conveyor set 3; the support assembly 4 includes a transmission member, a circulation driving member, and a support member 47, where the support member 47 is mounted on a bottom surface of the conveying belt 200 through the circulation driving member to support the conveying belt 200, and the circulation driving member is in transmission connection with a belt roller 100 in the belt conveyor through the transmission member; when the belt conveyors in the input belt conveyor 1, the separation belt conveyor set, and the multi-stage distance-increasing belt conveyor set 3 operate, the belt roller 100 rotates under the driving action of the conveying belt 200, and in this case, the belt roller 100 drives the circulation driving member to operate through the transmission member, such that the circulation driving member drives the support member 47 to move synchronously with the conveying belt 200 on a bottom surface of the conveying belt 200;
driving rollers in transmission connection with the conveying belt 200 are mounted in the belt conveyors in the input belt conveyor 1, the separation belt conveyor set, and the multi-stage distance-increasing belt conveyor set 3, the driving rollers cooperate with tensioning rollers to tension and install the conveying belt 200 between two belt rollers 100, when the belt conveyor operates, the driving rollers drive the conveying belt 200 to move and convey, and at the same time, the conveying belt 200 drives the belt roller 100 to rotate and move through friction during movement;
when large packages are separated and sorted, the packages are first placed on the input belt conveyor 1, and gradually conveyed to the separation belt conveyor set of the separation area 2 through the input belt conveyor 1; the visual inspection system 23 detects the positions of packages conveyed to the separation belt conveyor set and controls the activation of the belt conveyor at the position corresponding to the package in the separation belt conveyor set according to the detected package position information, such that the separation belt conveyor set outputs the packages fed by the input belt conveyor 1 in a single column at a certain spacing toward the multi-stage distance-increasing belt conveyor set 3, thereby completing the sorting and initial separation of packages; the multi-stage distance-increasing belt conveyor set 3 adjusts packages fed by the separation belt conveyor set stage by stage to increase the package spacing, so as to adjust the package spacing to a specified spacing at a distal end of the multi-stage distance-increasing belt conveyor set 3, and finally convey the packages to the next process at the specified spacing;
when the belt conveyors in the input belt conveyor 1, the separation belt conveyor set, and the multi-stage distance-increasing belt conveyor set 3 convey packages during operation, the belt roller 100 rotates under the driving action of the conveying belt 200, and in this case, the belt roller 100 drives the circulation driving member to operate through the transmission member, such that the circulation driving member drives the support member 47 to move synchronously with the conveying belt 200 on a bottom surface of the conveying belt 200;
in this example, a divergence area included in a standard sorting machine is removed, such that the sorting machine is more suitable for conveying and sorting large and heavy packages, and the equipment cost is saved by eliminating a redundant design; and the multi-stage distance-increasing belt conveyor set 3 performs a plurality of small-amplitude distance-increasing operations on a plurality of packages simultaneously, and compared with distance increasing by means of a single long-duration pause, the efficiency of increasing the distance between the packages is significantly improved, thereby improving the efficiency of separating and sorting the packages by means of the sorting machine, and reducing the jamming of packages; and
the support assembly 4 supports and protects the conveying belt 200 in the belt conveyor during the conveying of large packages through the input belt conveyor 1, the separation belt conveyor set, and the multi-stage distance-increasing belt conveyor set 3, which prevents the conveying belt 200 from being compressed, deformed, or broken due to the heavy weight of packages, and ensures the normal operation of the input belt conveyor 1, the separation belt conveyor set, and the multi-stage distance-increasing belt conveyor set 3; the support member 47 in the support assembly 4 moves synchronously with the conveying belt 200 for support, which prevents relative sliding and friction between the conveying belt 200 and the support member 47 during movement, prevents continuous heating of the conveying belt 200 due to long-term friction during operation, and prevents wear-induced damage to the conveying belt 200 or fire caused by friction-induced high temperature, thereby extending the service life of the conveying belt 200 and enhancing the safety of using the sorting machine.

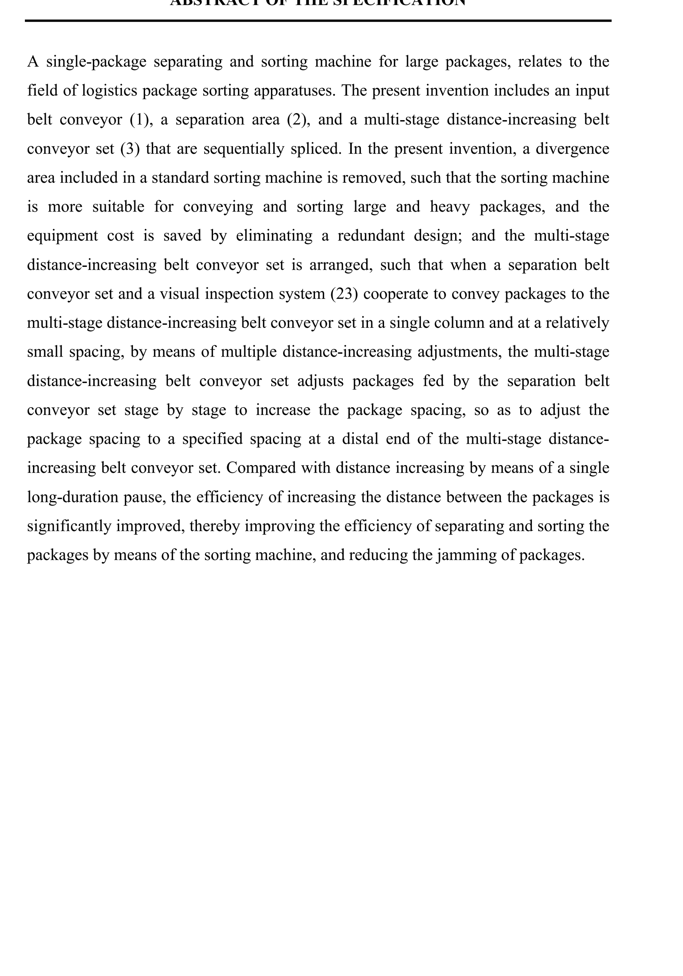

With reference to FIGS. 1-3, in an example, the separation belt conveyor set includes a plurality of small separation belt conveyors 21, and the plurality of small separation belt conveyors 21 are arranged in a matrix manner and evenly distributed;
when packages are conveyed from the input belt conveyor 1 to the separation belt conveyor set, the visual inspection system 23 detects the position distribution and placement of packages on the separation belt conveyor set to determine the spacing between adjacent packages, and controls the activation or deactivation of the small separation belt conveyors 21 at the positions below the packages in each row according to the spacing between the adjacent packages and the actual positions of packages, so as to separate and increase the spacing between adjacent packages by controlling the activation or deactivation of the small separation belt conveyors 21 in different rows until the packages are conveyed to the multi-stage distance-increasing belt conveyor set 3 at a certain spacing; and
furthermore, when the visual inspection system 23 detects that a package is placed obliquely on the separation belt conveyor set, during the separation and sorting of the packages through the small separation belt conveyor 21, the small separation belt conveyor 21 drives the package to move and realign by controlling the activation or deactivation of the small separation belt conveyors 21 in different columns of the same row; and when the right side of the package is offset backward, the small separation belt conveyor 21 on a right side below the package is activated first, and the right side of the package is conveyed forward for a certain distance through the small separation belt conveyor 21 on the right side, such that the package is gradually realigned on the separation belt conveyor set; and finally all the small separation belt conveyors 21 below the package are activated to convey the package, such that the package is realigned and enters the multi-stage distance-increasing belt conveyor set 3, and finally the multi-stage distance-increasing belt conveyor set 3 conveys the package to the next process in a realigned state and at the specified spacing, thereby facilitating subsequent processes such as clamping and conveying of the package.

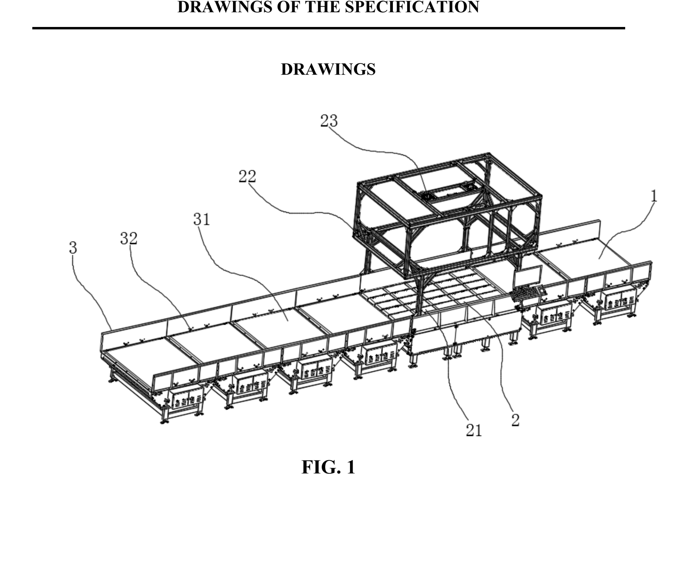

With reference to FIGS. 1-4, in an example, the multi-stage distance-increasing belt conveyor set 3 includes a plurality of distance-increasing belt conveyors 31, the plurality of distance-increasing belt conveyors 31 are sequentially spliced, and photoelectric sensors 32 on both sides above the conveying belt 200 configured to detect the positions of packages are mounted on each of the distance-increasing belt conveyors 31;
when the multi-stage distance-increasing belt conveyor set 3 operates, packages are sequentially conveyed by the plurality of distance-increasing belt conveyors 31, the spacing between two adjacent packages is adjusted by controlling the activation or deactivation of two adjacent distance-increasing belt conveyors 31 during conveying of the packages, and the photoelectric sensors 32 detect the position of the package on the corresponding distance-increasing belt conveyor 31 to determine the spacing between adjacent packages until the spacing between adjacent packages is adjusted to the specified spacing after the distance-increasing adjustment by the plurality of distance-increasing belt conveyors 31, thereby completing the spacing adjustment of the packages; and
preferably, in this example, a speed control strategy is adopted in which a speed of the input belt conveyor 1 is 1.5 m/s, and speeds of the small separation belt conveyor 21 and the distance-increasing belt conveyor 31 are 2.3 m/s, and under this speed control strategy, the efficiency of separating and sorting the packages is high, and package jamming is less likely to occur.

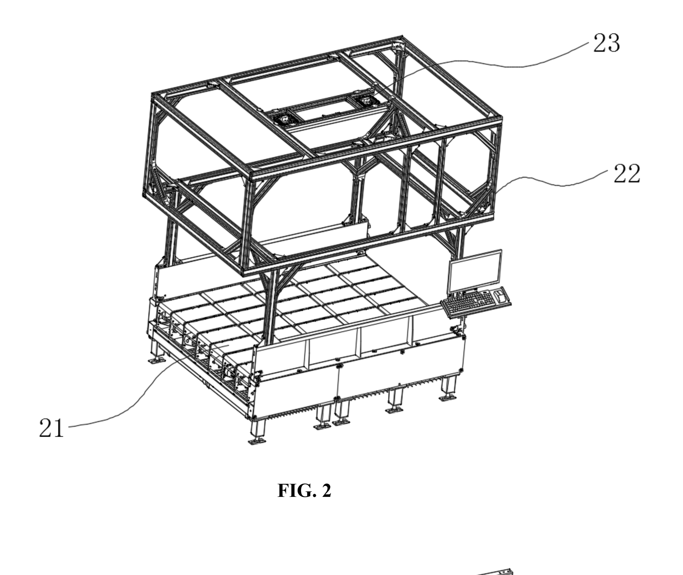

With reference to FIGS. 5-7, in an example, the circulation driving member includes two transmission rollers 41 and two transmission belts 42, the two transmission rollers 41 are arranged in parallel and rotatably mounted on a frame of the belt conveyor, the transmission belts 42 are transmission-mounted between both ends of the two transmission rollers 41, and the support member 47 is fixedly mounted between the two transmission belts 42; the two transmission rollers 41 are respectively disposed on one side of the two belt rollers 100 on the belt conveyor, and the belt roller 100 is in transmission connection with the transmission roller 41 on one side through a transmission member; the transmission member includes a driven pulley 44 and a driving pulley 46, the driven pulley 44 is fixedly mounted at an end portion of the transmission roller 41, the driving pulley 46 is fixedly mounted at an end portion of the belt roller 100, and the driving pulley 46 and the driven pulley 44 are in transmission connection through a transmission belt 45;
when the belt roller 100 rotates with the movement and conveying of the conveying belt 200, the belt roller 100 drives the driving pulley 46 to rotate synchronously, and at the same time, the driving pulley 46 drives the driven pulley 44 to rotate through the transmission belt 45, such that the driven pulley 44 drives the transmission roller 41 to rotate in a same direction as the belt roller 100; when rotating, the transmission roller 41 drives the transmission belt 42 to move in the same direction as the conveying belt 200, and drives the support member 47 to move in the same direction on the bottom surface of the conveying belt 200, so as to movably support the conveying belt 200 through the support member 47; and
furthermore, when the transmission roller 41 and the belt roller 100 have a same diameter, transmission pulleys of the driving pulley 46 and the driven pulley 44 also have a same diameter, and when the diameter of the transmission roller 41 increases or decreases, the diameter of the driven pulley 44 at an end portion thereof also increases or decreases accordingly, such that rotational linear speeds of the transmission roller 41 and the belt roller 100 are always the same, and moving speeds of the transmission belt 42 and the support member 47 are always the same as that of the conveying belt 200, thereby achieving the synchronous movement of the support member 47 and the conveying belt 200, and ensuring that no sliding friction occurs between the support member 47 and the conveying belt 200.

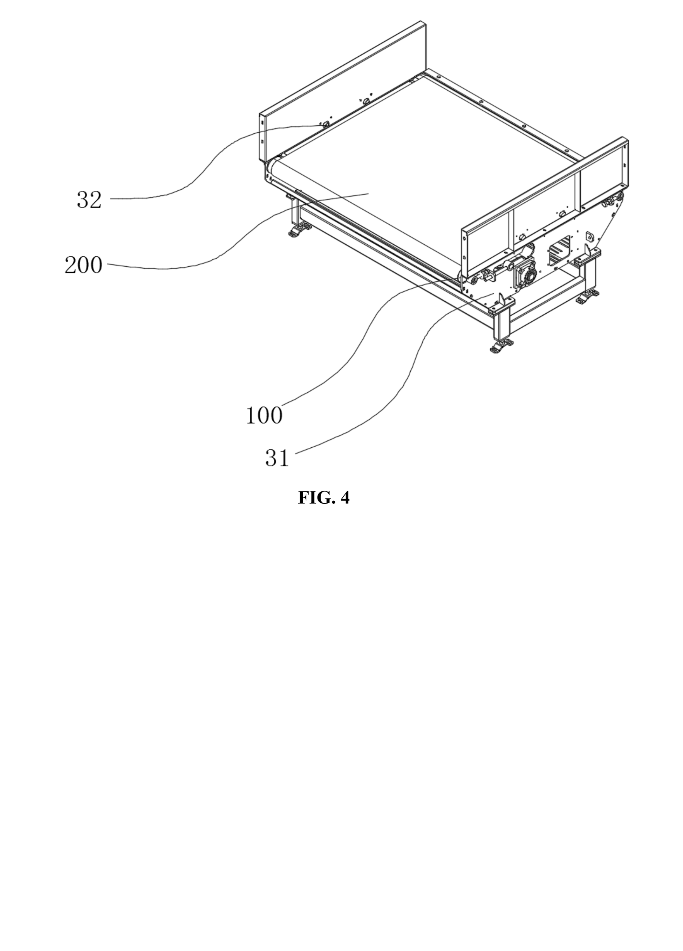

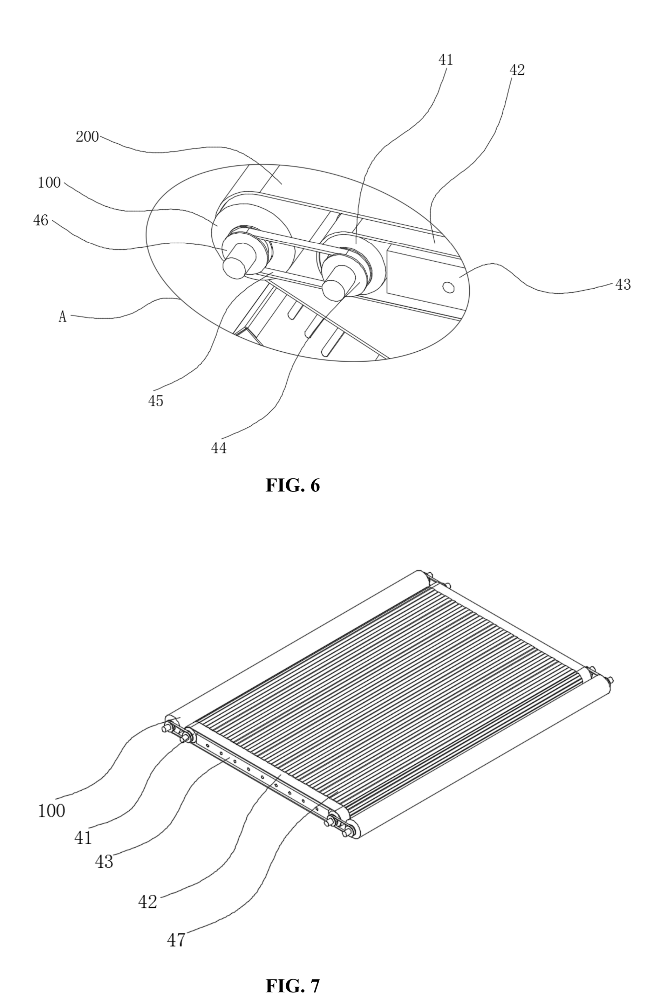

With reference to FIGS. 7-10, in an example, the support member 47 includes a plurality of supporting strips 471 and a plurality of flexible connecting ribs 472, and adjacent supporting strips 471 are arranged in parallel and flexibly connected through the flexible connecting ribs 472; the plurality of supporting strips 471 are sequentially connected through the flexible connecting ribs 472 to form a supporting belt, the supporting belt is connected end to end to form an annular belt, and both sides of the annular belt are respectively fixedly connected to inner side edges of the two transmission belts 42; and
the support member 47 is formed by connecting the plurality of supporting strips 471 and the plurality of flexible connecting ribs 472 in a staggered manner, such that the support member 47 has sufficient flexibility and moves circularly under the driving action of the transmission belt 42; and when the support member 47 is tensioned between the two transmission rollers 41, the arrangement of the supporting strips 471 enables the support member 47 to have sufficient supporting performance and stably support the conveying belt 200 and the packages thereon.

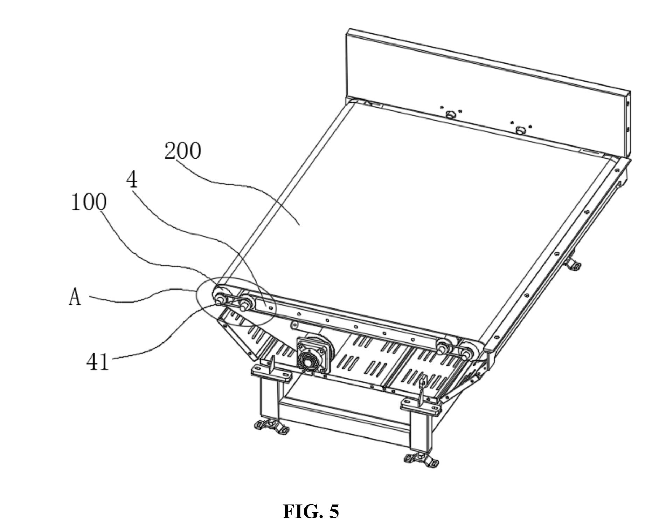

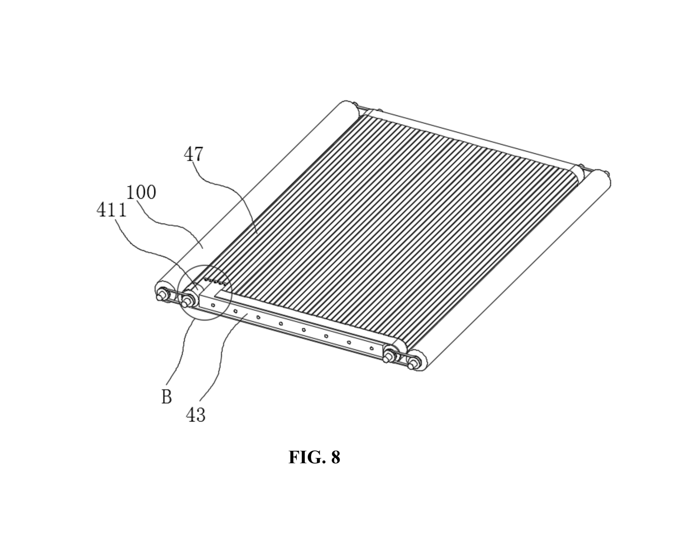

With reference to FIGS. 8-11, in an example, a support plate 43 is disposed between the two transmission rollers 41, and the support plate 43 is fixedly mounted on the frame of the bell conveyor; a plurality of equidistantly distributed support blocks 48 are fixedly mounted on bottom surfaces of the supporting strips 471, a support roller 49 is rotatably mounted on a bottom surface of the support block 48, and a bottom end of the support roller 49 is movably abutted against a surface of the support plate 43; and
the support plate 43, the support block 48, and the support roller 49 cooperate to support the supporting strip 471, which improves the overall stability of the support member 47, and further enhances the supporting effect of the support member 47 on the conveying belt 200, thereby ensuring the normal operation of the conveying belt 200; the support member 47 is in rolling connection with the support plate 43 through the support roller 49, and when the support member 47 drives the support roller 49 to move on the surface of the support plate 43, rolling friction occurs between the support roller 49 and the support plate 43, which reduces the friction between the support roller 49 and the support plate 43, prevents friction damage to the support roller 49 and the support plate 43, extends the service life of the support assembly 4, and prevents fires caused by frictional heating, thereby further enhancing the safety of using the sorting machine.

With reference to FIGS. 8-11, in an example, friction transmission portions 411 corresponding to the transmission belt 42 are disposed at both ends of the transmission roller 41, and a clearance portion 412 that provides clearance for the support block 48 and the support roller 49 on the bottom surface of the supporting strip 471 is disposed at a middle of the transmission roller 41; and
the friction transmission portions 411 are configured to provide static friction between contact surfaces of the transmission roller 41 and the transmission belt 42, such that when the transmission roller 41 rotates, the transmission belt 42 is driven to move by static friction; the clearance portion 412 is configured as a connecting shaft with a diameter smaller than that of the friction transmission portion 411, such that a certain gap is created between the transmission roller 41 and the bottom surface of the support member 47; and when the support member 47 drives the support block 48 and the support roller 49 to pass by the position of the transmission roller 41, the support block 48 and the support roller 49 pass through the gap without contact with the transmission roller 41, thereby preventing the transmission roller 41 from interfering with the support block 48 and the support roller 49, and ensuring the normal movement and operation of the support member 47.

Usage method:
The packages are first placed on the input belt conveyor 1, and gradually conveyed to the separation belt conveyor set of the separation area 2 through the input belt conveyor 1; the visual inspection system 23 detects the positions of packages conveyed to the separation belt conveyor set and controls the activation of the belt conveyor at the position corresponding to the package in the separation belt conveyor set according to the detected package position information, such that the separation belt conveyor set outputs the packages fed by the input belt conveyor 1 in a single column at a certain spacing toward the multi-stage distance-increasing belt conveyor set 3, thereby completing the sorting and initial separation of packages; the multi-stage distance-increasing belt conveyor set 3 adjusts packages fed by the separation belt conveyor set stage by stage to increase the package spacing, so as to adjust the package spacing to a specified spacing at a distal end of the multi-stage distance-increasing belt conveyor set 3, and finally convey the packages to the next process at the specified spacing;
driving rollers in transmission connection with the conveying belt 200 are mounted in the belt conveyors in the input belt conveyor 1, the separation belt conveyor set, and the multi-stage distance-increasing belt conveyor set 3, the driving rollers cooperate with tensioning rollers to tension and install the conveying belt 200 between two belt rollers 100, when the belt conveyor operates, the driving rollers drive the conveying belt 200 to move and convey, and at the same time, the conveying belt 200 drives the belt roller 100 to rotate and move through friction during movement;
the belt roller 100 drives the driving pulley 46 to rotate synchronously, and at the same time, the driving pulley 46 drives the driven pulley 44 to rotate through the transmission belt 45, such that the driven pulley 44 drives the transmission roller 41 to rotate in a same direction as the belt roller 100; when rotating, the transmission roller 41 drives the transmission belt 42 to move in the same direction as the conveying belt 200, and drives the support member 47 to move in the same direction on the bottom surface of the conveying belt 200, so as to movably support the conveying belt 200 through the support member 47; and the support member 47 is roller-supported on the support plate 43 through the support roller 49, such that the stability of the conveying belt 200 during operation is enhanced through the cooperation of the support plate 43, the support roller 49, and the support member 47.

In the description of the specification, the description of reference terms "an example", " instances", "specific instances", etc. means that specific features, structures, materials or characteristics described in combination with the embodiment or example are included in at least one embodiment or example of the present invention. In the specification, the schematic description of the above terms does not necessarily refer to the same example or instance. Moreover, the specific features, structures, materials or characteristics described may be combined in a suitable manner in any one or more embodiments or examples.

The preferred examples of the present invention disclosed above are merely used to assist in illustrating the present invention. The preferred examples neither describe all the details in detail, nor limit the present invention to the specific embodiments only. Obviously, various modifications and variations may be made according to the content of the specification. The specification selects and specifically describes these embodiments, to better explain the principle and practical application of the present invention, so that a person skilled in the art may well understand and utilize the present invention.

## Claims

1. A single-package separating and sorting machine for large packages, **characterized by** comprising an input belt conveyor (1), a separation area (2), and a multi-stage distance-increasing belt conveyor set (3);
the input belt conveyor (1) is configured to convey packages toward the separation area (2);
the separation area (2) comprises a separation belt conveyor set, a bracket (22), and a visual inspection system (23), the separation belt conveyor set is spliced and mounted between the input belt conveyor (1) and the multi-stage distance-increasing belt conveyor set (3), the bracket (22) is fixedly mounted above the separation belt conveyor set, and the visual inspection system (23) is fixedly mounted at a top end of the bracket (22);
the visual inspection system (23) detects positions of packages conveyed to the separation belt conveyor set and controls the activation of the separation belt conveyor set according to detected package position information, such that the separation belt conveyor set outputs the packages fed by the input belt conveyor (1) in a single column at a certain spacing toward the multi-stage distance-increasing belt conveyor set (3);
the multi-stage distance-increasing belt conveyor set (3) adjusts the packages fed by the separation belt conveyor set stage by stage to increase a package spacing, so as to adjust the package spacing to a specified spacing at a distal end of the multi-stage distance-increasing belt conveyor set (3);
support assemblies (4) located below a conveying belt (200) on the belt conveyor are mounted in the input belt conveyor (1), the separation belt conveyor set, and the multi-stage distance-increasing belt conveyor set (3);
the support assembly (4) comprises a transmission member, a circulation driving member, and a support member (47), wherein the support member (47) is mounted on a bottom surface of the conveying belt (200) through the circulation driving member to support the conveying belt (200), and the circulation driving member is in transmission connection with a belt roller (100) in the belt conveyor through the transmission member; and
when the belt conveyors in the input belt conveyor (1), the separation belt conveyor set, and the multi-stage distance-increasing belt conveyor set (3) operate, the belt roller (100) rotates under the driving action of the conveying belt (200), and in this case, the belt roller (100) drives the circulation driving member to operate through the transmission member, such that the circulation driving member drives the support member (47) to move synchronously with the conveying belt (200) on the bottom surface of the conveying belt (200).

2. The single-package separating and sorting machine for large packages according to claim 1, **characterized in that** the separation belt conveyor set comprises a plurality of small separation belt conveyors (21), and the plurality of small separation belt conveyors (21) are arranged in a matrix manner and evenly distributed.

3. The single-package separating and sorting machine for large packages according to claim 1, **characterized in that** the multi-stage distance-increasing belt conveyor set (3) comprises a plurality of distance-increasing belt conveyors (31), the plurality of distance-increasing belt conveyors (31) are sequentially spliced, and photoelectric sensors (32) on both sides above the conveying belt (200) configured to detect the positions of packages are mounted on each of the distance-increasing belt conveyors (31).

4. The single-package separating and sorting machine for large packages according to claim 1, **characterized in that** the circulation driving member comprises two transmission rollers (41) and two transmission belts (42), the two transmission rollers (41) are arranged in parallel and rotatably mounted on a frame of the belt conveyor, the transmission belts (42) are transmission-mounted between both ends of the two transmission rollers (41), and the support member (47) is fixedly mounted between the two transmission belts (42); and
the two transmission rollers (41) are respectively disposed on one side of the two belt rollers (100) on the belt conveyor, and the belt roller (100) is in transmission connection with the transmission roller (41) on one side through a transmission member.

5. The single-package separating and sorting machine for large packages according to claim 4, **characterized in that** the transmission member comprises a driven pulley (44) and a driving pulley (46), the driven pulley (44) is fixedly mounted at an end portion of the transmission roller (41), the driving pulley (46) is fixedly mounted at an end portion of the belt roller (100), and the driving pulley (46) and the driven pulley (44) are in transmission connection through a transmission belt (45).

6. The single-package separating and sorting machine for large packages according to claim 4, **characterized in that** the support member (47) comprises a plurality of supporting strips (471) and a plurality of flexible connecting ribs (472), and adjacent supporting strips (471) are arranged in parallel and flexibly connected through the flexible connecting ribs (472); and
the plurality of supporting strips (471) are sequentially connected through the flexible connecting ribs (472) to form a supporting belt, the supporting belt is connected end to end to form an annular belt, and both sides of the annular belt are respectively fixedly connected to inner side edges of the two transmission belts (42).

7. The single-package separating and sorting machine for large packages according to claim 6, **characterized in that** a support plate (43) is disposed between the two transmission rollers (41), and the support plate (43) is fixedly mounted on the frame of the belt conveyor; and
a plurality of equidistantly distributed support blocks (48) are fixedly mounted on bottom surfaces of the supporting strips (471), a support roller (49) is rotatably mounted on a bottom surface of the support block (48), and a bottom end of the support roller (49) is movably abutted against a surface of the support plate (43).

8. The single-package separating and sorting machine for large packages according to claim 7, **characterized in that** friction transmission portions (411) corresponding to the transmission belt (42) are disposed at both ends of the transmission roller (41), and a clearance portion (412) that provides clearance for the support block (48) and the support roller (49) on a bottom surface of the supporting strip (471) is disposed at a middle of the transmission roller (41).
